# EUROPEAN PATENT SPECIFICATION

(11) **EP 3 365 159 B1**
(45) Date of publication and mention of the grant of the patent: **27.02.2019**
(21) Application number: 16788248.9
(22) Date of filing: 18.10.2016
(51) Int. Cl.: B29C 70/44, B29C 33/50, B29C 33/76, B29D 99/00, B64C 1/06, B64C 3/18, B64C 1/00

(54) **METHOD AND APPARATUS FOR FORMING A COMPOSITE SKIN-STIFFENER ASSEMBLY**
VERFAHREN UND VORRICHTUNG FÜR DIE HERSTELLUNG EINER HAUT-STRINGER-FASERVERBUNDSTRUKTUR
PROCÉDÉ ET DISPOSITIF POUR FABRIQUER UNE STRUCTURE PEAU-RAIDISSEUR EN COMPOSITE

(30) Priority: 19.10.2015 US 201562243183 P
(43) Date of publication of application: 29.08.2018
(73) Proprietor: Bombardier Inc., Dorval, QC H4S 1Y9 (CA); Short Brothers Plc, Belfast BT3 9DZ (GB)
(72) Inventor: CARON, Richard, Mascouche, Québec J7L 4B4 (CA); RIFAY, Mouhcine, Montréal, Québec H1R 1N2 (CA); SALEK, Hasan, Laval, Québec H7X 1P3 (CA); HOSTE, Didier, Montréal, Québec H2C 2R4 (CA); LANGLOIS, Richard, Laval, Québec H7P 5Y4 (CA)
(74) Representative: Holmes, Matthew William
(86) International application number: PCT/IB2016/056257
(87) International publication number: WO 2017/068497

(56) References cited:
- EP-A1- 2 364 837
- CA-A1- 2 923 891
- US-A- 5 454 895

## Description

### CROSS-REFERENCE TO RELATED APPLICATIONS

This application claims priority from U.S. provisional application No. 62/243,183 filed October 19, 2015.

### TECHNICAL FIELD

The present invention relates generally to a method of forming of composite parts according to claim 1, and more particularly to the use of bagged inserts for supporting stiffeners. Furtheron the invention relates to an assembly for supporting a composite part according to claim 8.

### BACKGROUND OF THE ART

Single sided tools are used to manufacture some composite aerospace structural parts. Typically, resin pre-impregnated fabric ("pre-preg") is laid on the tool surface and the part is cured with heat, while under vacuum, and optionally with application of additional pressure on the part (e.g. curing in autoclave). When forming a skin with stiffeners, the layup is generally performed in a concave (female) or outer mold line tool to ease the placement and compaction of the stiffeners during the cure - the outer surface of the skin is thus the surface in contact with the mold surface. The part obtained by this process may thus have a low quality faying surface on the inner mold line, which typically increases the assembly time by requiring the addition of different types of shims.

Although the use of an inner mold line tool, such that the inner surface of the skin is in contact with the mold surface, can significantly improve the faying surface quality and consequently reduce the assembly time, existing methods of compacting stringers with an inner mold line tool present several drawbacks. Known methods include the use of bladders, which may be complex to remove, may require specific forming tools, may generate contaminants that impact inter-laminar properties of the composite part, and/or may be relatively costly to use; and the use of rigid caul plates, which may not be suitable for complex geometries, may require high machining precision, and/or may generate thermal expansion issues during cure.

US5,454,895 discloses a known method of forming composite parts.

### SUMMARY

In one aspect, there is provided a method of forming a composite part having a skin and at least one elongated stiffener extending from the skin, the method comprising: providing a mold having a mold surface and a respective elongated compaction cavity for each stiffener, each elongated compaction cavity opening into the mold surface; for each stiffener: placing a bagged insert including an insert received in a tubular bag in the respective elongated compaction cavity, supporting the stiffener with the bagged insert, the stiffener having a first part extending in the elongated compaction cavity snuggly between a side surface of the bagged insert and an adjacent side surface of the mold bordering the elongated compaction cavity, the stiffener having a second part connected to the first part and extending over at least one of the mold surface and a top surface of the bagged insert; placing a skin over and in contact with the mold surface, and over and in contact with the second part of each stiffener; forming a sealed enclosure containing the skin and each stiffener, the sealed enclosure being formed in part by each tubular bag, each insert being located outside of the sealed enclosure; reducing a pressure within the sealed enclosure; removing each insert from the tubular bag; and curing the skin and each stiffener.

In a particular embodiment, the method further comprises inserting the insert in the tubular bag to obtain the bagged insert, including inserting two complementary portions of the insert in the tubular bag. The first one of the complementary portions may define an entirety of the top surface of the bagged insert.

In a particular embodiment, the stiffener is supported with the second part of the stiffener extending over the mold surface and the top surface of the bagged insert. Each stiffener may be a stringer with a T-shaped cross-section, the second part defining a base and the first part defining a leg extending transversely to the base.

In a particular embodiment, the insert is loosely received within the tubular bag, and the method further comprises inserting the insert in the tubular bag to obtain the bagged insert, including receiving excess material from the tubular bag in a recess defined in a surface of the insert spaced from the stiffener.

In a particular embodiment, each stiffener and the skin are formed of pre-preg material.

In a particular embodiment, forming the sealed enclosure includes overlaying the skin with an additional mold element and forming the sealed enclosure to contain the additional mold element.

In a particular embodiment, forming the sealed enclosure includes sealingly engaging an additional bagging material with the mold surface around a perimeter surrounding the skin and each stiffener, and sealingly engaging an outer surface of each end of each tubular bag to a surface of the mold around a perimeter of an open end of the elongated compaction cavity.

In another aspect, there is provided an insert assembly for supporting a composite part before cure, the assembly comprising: an elongated insert having first and second opposed elongated surfaces interconnected by third and fourth opposed elongated surfaces, the elongated insert including: a first elongated portion defining the first surface and part of the third and fourth surfaces, and a second elongated portion defining the second surface and a remaining part of the third and fourth surfaces, wherein one of the surfaces of the second elongated portion has an elongated recess defined therein; and a tubular bag containing the insert, the bag sized to surround a cross-sectional area greater than an area of a cross-section of the insert such that the insert is loosely received within the bag; wherein the recess defines a space for receiving excess material from the tubular bag when the tubular bag is extended smoothly in contact with the surfaces of the insert.

In a particular embodiment, in a plane perpendicular to a longitudinal axis of the insert, a perimeter defined by the cross-section of the insert is at least equal than a maximum perimeter defined by the tubular bag.

In a particular embodiment, the elongated recess is defined in the second surface.

In a further aspect, there is provided an assembly for forming a composite part, the assembly comprising: a mold having a mold surface; a skin having an internal surface lying against the mold surface; at least one stiffener extending from the internal surface of the skin, wherein each of the at least one stiffener: is partially received in a respective elongated compaction cavity of the mold, the respective elongated compaction cavity opening into the mold surface, and is supported and maintained in contact with the mold and with the skin by a respective bagged insert received in the respective elongated compaction cavity, the stiffener having a first part extending between the bagged insert and a side surface of the mold bordering the respective elongated compaction cavity; wherein each bagged insert includes an elongated insert received in a respective tubular bag; an additional mold element overlying an outer surface of the skin; and a sealed enclosure defined in part by each tubular bag, wherein the skin, the mold element, each stiffener and at least part of the mold surface are contained within the sealed enclosure, each insert being located outside of the sealed enclosure such as to be removable from the respective tubular bag.

In a particular embodiment, each insert includes two complementary elongated portions, a first one of the complementary elongated portions defines an entirety of the top surface of the bagged insert.

In a particular embodiment, each stiffener is supported with a second part of the stiffener extending over the mold surface and a top surface of the bagged insert. Each stiffener may be a stringer with a T-shaped cross-section, the second part defining a base and the first part defining a leg extending transversely to the base.

In a particular embodiment, the insert includes a recess defined in a surface of the insert spaced from the stiffener, the tubular bag having excess material received in the recess.

In a particular embodiment, each stiffener and the skin are formed of pre-preg material.

In a particular embodiment, the sealed enclosure is defined by an additional bagging material sealingly engaged with the mold surface around a perimeter surrounding the skin, the additional mold element and each stiffener, and by a sealing engagement of an outer surface of each end of each tubular bag to a surface of the mold around a perimeter of an open end of the elongated compaction cavity. The assembly may include, on each end of the respective elongated compaction cavity, an elevated surface extending from the mold surface and forming a bridge extending over each elongated compaction cavity, the additional bagging material being sealingly engaged to the bridge over each elongated compaction cavity.

In a particular embodiment, the assembly further comprises, for each of the at least one stiffener, first and second end caps each received in the respective elongated compaction cavity adjacent a respective end of the stiffener, the first and second end caps supporting the skin beyond a length of the stiffener.

### DESCRIPTION OF THE DRAWINGS

Reference is now made to the accompanying figures in which:
Fig. 1 is a schematic isometric view of an aircraft;
Fig. 2 is a schematic cross-sectional view of a composite part in accordance with a particular embodiment, which may be used in an aircraft such as shown in Fig. 1;
Fig. 3 is a schematic exploded cross-sectional view of an assembly for forming the composite part of Fig. 2, in accordance with a particular embodiment;
Fig. 4 is a schematic tridimensional exploded view of the assembly of Fig. 3;
Fig. 5 is a schematic cross-sectional view of part of the assembly of Fig. 3;
Fig. 6 is a schematic tridimensional view of a bagged insert used in the assembly of Fig. 3;
Fig. 7 is a schematic tridimensional view of a section of the assembly of Fig. 3; and
Fig. 8 is a schematic tridimensional exploded view of the section of assembly of Fig. 7.

### DETAILED DESCRIPTION

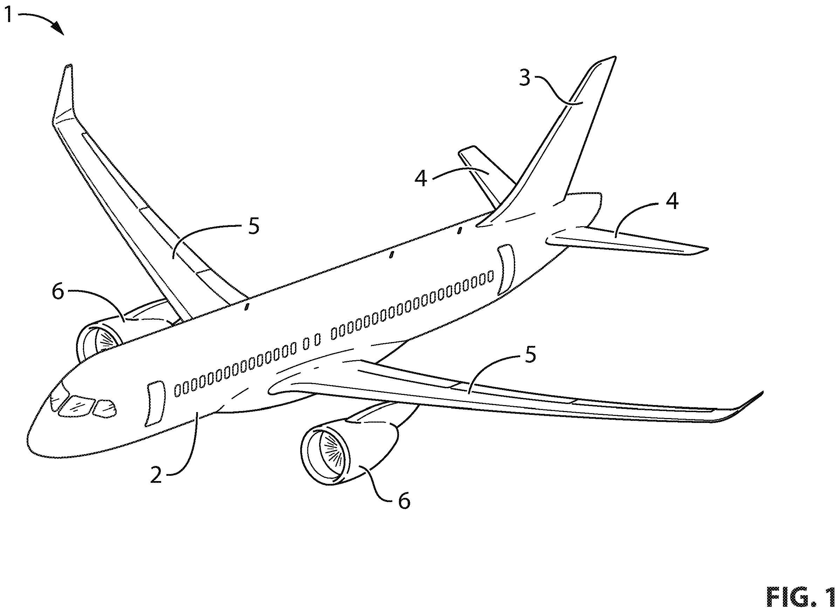

Referring to the drawings and more particularly to Fig. 1, an aircraft is shown at 1, and is generally described to illustrate some components for reference purposes in the present disclosure. The aircraft 1 has a fuselage 2 having a fore end at which a cockpit is located, and an aft end supporting a tail assembly, with the cabin generally located between the cockpit and the tail assembly. The tail assembly comprises a vertical stabilizer 3 with a rudder, and horizontal stabilizers 4 with elevators. The tail assembly has a fuselage-mounted tail, but other configurations may also be used for the aircraft 1, such as cruciform, T-tail, etc. Wings 5 project laterally from the fuselage. The aircraft 1 has engines 6 supported by the wings 5, although the engines 6 could also be mounted to the fuselage 2. The aircraft 1 is shown as a jet-engine aircraft, but may also be a propeller aircraft.

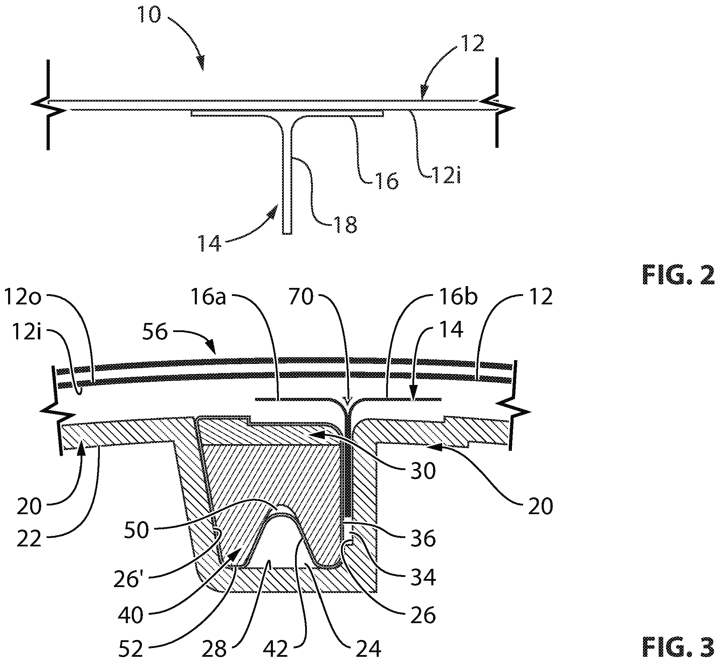

Referring to Fig. 2, a composite part 10 according to a particular embodiment is shown. The composite part 10 is a panel including a skin 12 and a stiffener or stringer 14 extending from an inner surface 12i of the skin 12. The stringer 14 shown has a T-shaped cross-section, with a base or flange 16 extending in contact with the inner surface 12i of the skin 12, and a leg or web 18 extending transversely (e.g. perpendicularly) from the base 16, for example along a central axis of the base 16. The stringer 14 is an elongated element extending longitudinally (i.e. along a direction perpendicular to the plane of the Figure).

Although the stringer 14 is shown as having a T-shaped cross-section, it is understood that the stringer 14 may alternately have any other appropriate cross-sectional shape, including, but not limited to, a C-shaped cross-section, an L-shaped cross-section and an I-shaped cross-section.

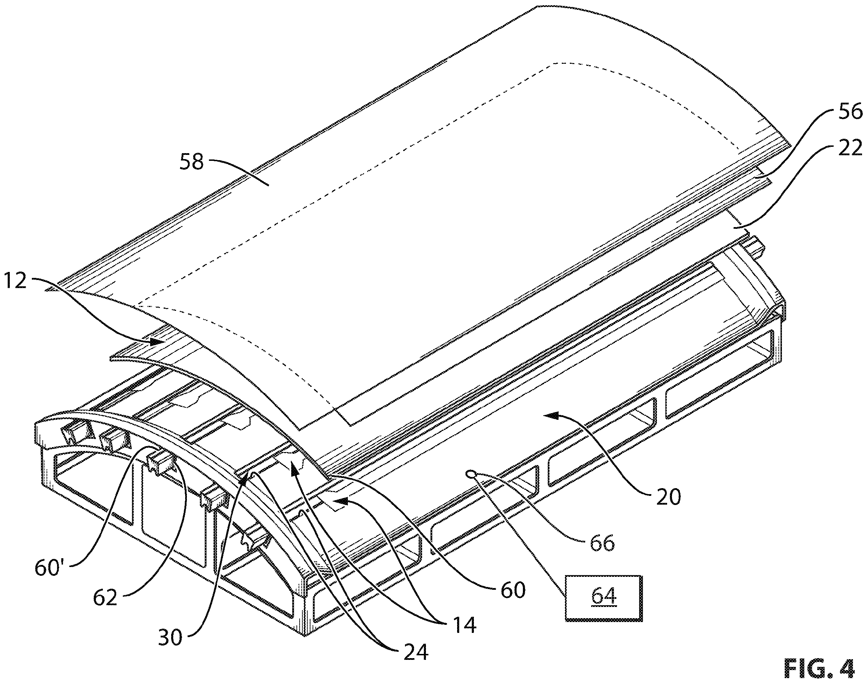

In a particular embodiment and as can be more clearly seen in Fig. 3, the skin 12 is curved. In another embodiment, the skin 12 is flat. The composite panel 10 may define a section of the fuselage 2, part of an internal bulkhead, part of the wing 5, or any other appropriate structural element of the aircraft 1. Although a single stringer 14 is shown in Figs. 2-3, it is understood that the composite panel 10 may and typically does include a plurality of stringers 14 spaced apart from one another, for example as shown in Fig. 4. As shown, the skin 12 may extend circumferentially/transversely beyond the stringer(s) 14. In a particular embodiment, each stringer 14 extends longitudinally along only part of a corresponding dimension of the skin 12, i.e. the skin 12 extends in the longitudinal direction beyond the stringer 14. In another embodiment, the stringer 14 extends longitudinally along the entire corresponding dimension of the skin 12.

The stringer 14 and skin 12 are formed with composite material, at least one of which being uncured with a stabilized geometry, i.e. having a matrix with a reduced viscosity without having been heated to the temperature point where polymerization typically starts (e.g., pre-preg); the stringer 14 or the skin 12 may be cured prior to assembly, such that curing of the uncured element assembled to the cured element provides for a co-bonding of the stringer 14 and skin 12. In the particular embodiment described herein, the skin 12 and stringer(s) 14 are both uncured with a stabilized geometry when assembled together, such as to be co-cured.

Although the method is described herein with specific reference to a stringer and skin assembly, it is understood that a similar method can be applied to any assembly of skin and stiffener(s), including, but not limited to, any stiffened vehicle structure (e.g. train roof) made of composite material.

Referring to Figs. 3-5, a method and assembly for manufacturing the composite part 10 according to particular embodiment is shown. A mold 20 is provided with a main mold surface 22 defining the inner mold line, in which is defined an elongated compaction cavity 24 for each stringer 14. As can be seen in Fig. 3, each compaction cavity 24 is bordered by two elongated opposed side surfaces 26, 26' extending from the main mold surface 22, and interconnected by an elongated bottom surface 28. One of the side surfaces 26 defines a mold surface for the stringer 14 which is a continuation of the inner mold line of the composite part, as will be detailed further below. The main mold surface 22 has a shape corresponding to the desired shape of the skin 12; in the particular embodiment shown, the skin 12 is curved, and the main mold surface 22 is correspondingly convex (male tool).

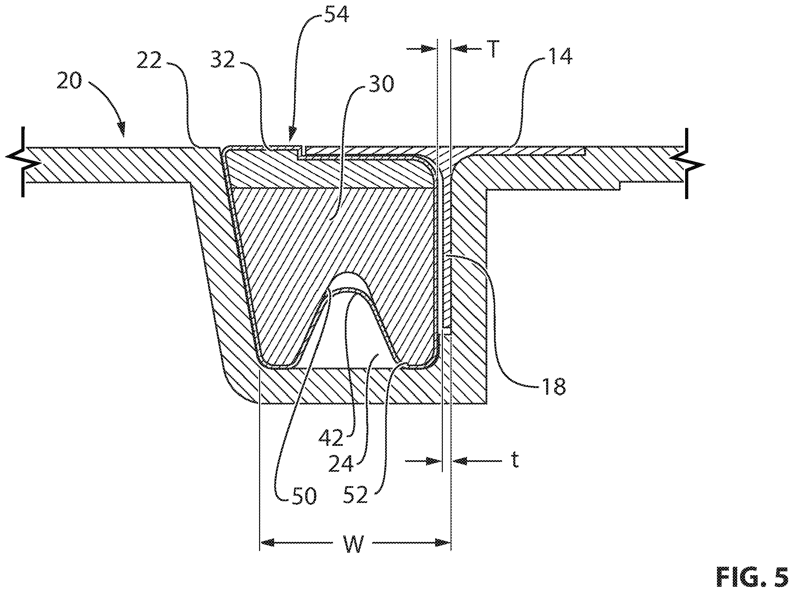

Each compaction cavity 24 receives an elongated bagged insert 30 therein. The bagged insert 30 is sized such that its top surface 32 forms a continuation of the main mold surface 22 (see Fig. 5), and such as to define an elongated space 34 (see Fig. 3) between the side surface 36 of the bagged insert 30 and the adjacent stringer mold surface 26 of the compaction cavity 24.

Each stringer 14 is formed before being assembled with the skin 12. For example, in the embodiment shown where the stringer 14 is T-shaped, the stringer 14 may be formed by separately forming two L-shaped stringers and then assembling them in a mirror position using an appropriate jig to form the T-shaped cross-section.

In a particular embodiment, each stringer 14 is assembled from plies of pre-preg (pre-impregnated) composite material including fibers bonded by a matrix material having a stabilized geometry to facilitate handling, such that the matrix material becomes solid yet remains flexible and tacky.

In a particular embodiment, the matrix material is a B-stage resin or a suitable thermoplastic material; any appropriate type of thermoset or thermoplastic matrix material may be used, including but not limited to epoxy resin, bismaleimide resin (BMI), phenolic resin, polyvinyl ester resin, polyether ether ketone (PEEK), polyphenylene sulphide (PPS), nylon, and poly ethylene (PE). Suitable fiber materials include, but not limited to, carbon fibers, glass fibers, and para-aramid (Kevlar®) fibers, and the fibers may be provided in any appropriate form including, but not limited, bidirectional fibers such as woven fabric and non-crimp fabric (NCF), and unidirectional fibers. The stringer(s) 14 may alternately be formed using any other adequate method, including but not limited to vacuum assisted resin infusion in conjunction with a dry preform.

Each stringer 14 is uncured and in a shape-retaining condition, such that it may be transported (optionally with the help of an appropriate support) to be added to the assembly. In a particular embodiment, each stringer 14 is made of a plurality of layers of pre-preg material and is compacted by vacuum debulk between placement of the layers (intermediate ply debulk), at room temperature or under temperature slightly higher than room temperature to ease the forming of multiple pre-preg layers from flat to a particular shape (e.g. L or C).

Referring back to Figs. 3-5, each compaction cavity 24 receives a stringer 14 therein, supported by the bagged insert 30 already in the compaction cavity 24. The base 16 of the stringer 14 is received over the top surface 32 of the bagged insert 30 and/or over the main mold surface 22; in the embodiment shown, since the stringer 14 is T-shaped, the base 16 of the stringer 14 has one side 16a received over the top surface 32 of the bagged insert 30 and one side 16b received over the main mold surface 22 (see Fig. 3). As can be best seen in Figs. 3 and 5, the part of the stringer 14 extending from the skin 12, i.e. the leg 18, is snuggly received in the elongated space 34 defined between the side surface 36 of the bagged insert 30 and the adjacent stringer mold surface 26 of the compaction cavity 24. Referring to Fig. 5, the transverse dimension T of the elongated space 34 is selected based on the thickness t of the leg 18 received therein, such as to be large enough to allow insertion of the stringer leg 18 between the bagged insert 30 and the stringer mold surface 26, but small enough for the bagged insert 30 to retain the leg 18 in contact with the stringer mold surface 26. The surface finish of the stringer 14 differs between the side in contact with the mold surfaces 22, 26 and the side that touches the surface of the bagged insert 30; accordingly, in a particular embodiment, the side of the stringer 14 in contact with the bagged insert 30 is selected based on a desired surface finish configuration for the stringer 14.

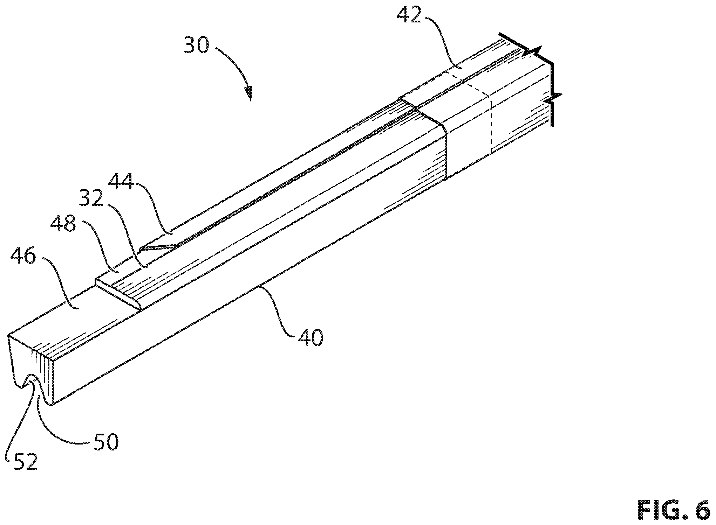

Referring to Fig. 6, the bagged insert 30 includes an insert 40 received in a tubular bag 42. The tubular bag 42 is made of any appropriate type of bagging material used for compaction and cure of composite materials, and has at least one open end. The insert 40 includes two cooperating elongated portions: the top portion 44 defines the top surface 32 of the insert and part of its side surfaces, and the bottom portion 46 defines the bottom surface of the insert and the remaining part of its side surfaces. In the embodiment shown, the top surface 32 supports one side 16a of the stringer base 16, and accordingly, the top portion 44 of the insert 40 is tailored to the geometry of the stringer 14 being supported; the top surface 32 is shaped to correspond to the desired shape of the side 16a of the stringer base 16 received thereon. In a particular embodiment, stringers 14 having different shapes may be supported by inserts 40 having a same bottom portion 46 but different top portions 44 tailored to the particular shape of the respective stringer 14.

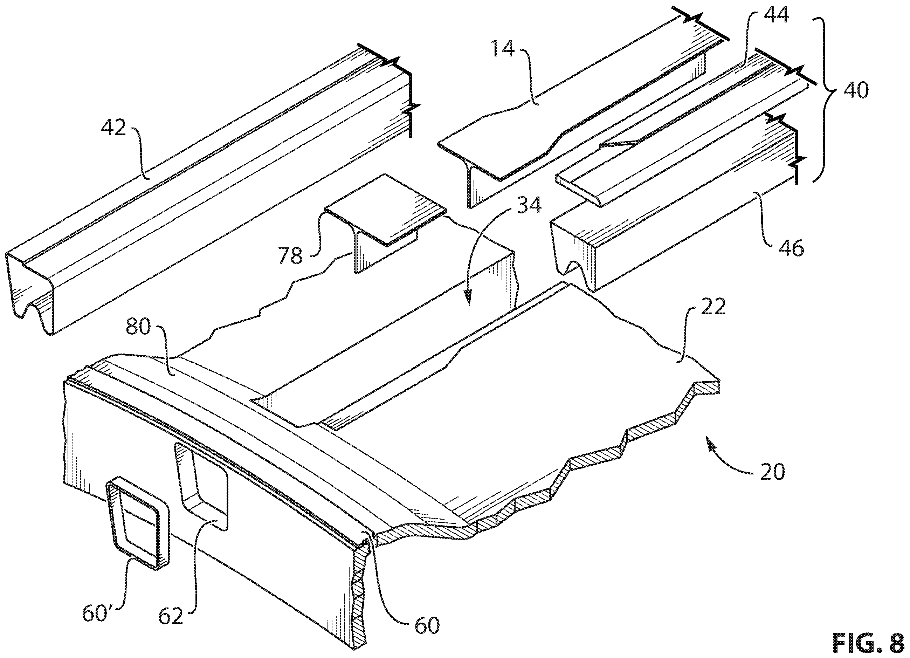

In the particular embodiment shown, the top surface 32 defined by the top portion 44 is designed to conform to a "grow-out" of the side 16a of the stringer base 16 received thereon, i.e. a portion of the base 16 having an increased width. The top surface 32 of the top portion 44 thus defines an indent 48 having a contour corresponding to that of the side 16a of the stringer base 16 received thereon. The mold surface 22 may also be similarly configured (see Fig. 8).

In a particular embodiment, the bottom portion 46 of the insert 40 has an elongated recess 50 defined along its length in one of its surfaces not contacting the stringer 14. In the embodiment shown, the recess 50 is defined in the bottom surface 52. The tubular bag 42 is sized to surround a cross-sectional area greater than the area of a cross-section of the insert 40; in other words, the insert 40 is loosely received within the bag 42, such that extra bag material is provided around the insert 40. The recess 50 defined in the bottom portion 46 however defines an increased perimeter (as compared with a similarly sized insert without the recess), and the recess 50 defines a space for receiving excess material from the tubular bag 42 when the tubular bag 42 is extended smoothly in contact with the surfaces of the insert 40. The recess 50 thus allows for reducing the risk of wrinkles in the tubular bag 42 over the surfaces of the insert 40, thus reducing the risk of causing surface defects in the stringer 14 and skin 12 with the tubular bag 42.

In a particular embodiment, in a plane perpendicular to a longitudinal axis of the insert (i.e., plane of Fig. 5), the perimeter of the cross-section of the insert 40 is at least equal to, and preferably greater than, the maximum perimeter defined by the wall of the tubular bag 42. Accordingly, pushing the excess bag material at its maximal depth within the recess 50 extends the remainder of the bag material over the surfaces of the insert 40 such that it extends smoothly thereover.

In a particular embodiment, the interior cavity of the tubular bag 42 is maintained at reduced pressure (e.g. vacuum) to ensure that the walls of the bag 42 conform to the surfaces of the stringer 14 to avoid the formation of wrinkles; the reduced pressure within the tubular bag 42 is maintained at least until the stringer 14 is placed over the bagged insert 30.

Once each stringer 14 is in position, the skin 12 is laid up over and in contact with the main mold surface 22, and over and in contact with the base 16 of each stringer 14, for example by hand, using automated fiber placement (AFP), or using automated tape laying (ATL). In a particular embodiment, the skin 12 is made of a plurality of superposed pre-preg layers; suitable materials include, for example, the materials listed above for the stringer(s) 14. In another embodiment, the skin 12 can be laid up using dry fabric. In the embodiment shown, the base 16 of the stringer 14 does not completely cover the top surface 32 of the bagged insert 30; the top surface 32 of the bagged insert 30 thus defines a step and an elevated portion 54 (see Fig. 5) aligned with the adjacent main mold surface 22, and also in contact with the skin 12. During the layup, each bagged insert 30 is thus acting as a hard tool by supporting the pre-preg layers of the stringer 14 and skin 12, preventing the layers of pre-preg from falling into the compaction cavity 24.

Referring to Figs. 3-4, a mold element is placed over the skin 12 to control the outer surface 12o of the skin 12. It is understood that in the present specification the term "mold element" is intended to encompass any tool having a shape-defining surface configured to control a surface of the part during curing, having any appropriate thickness, including, but not limited to, pressure pads typically referred to as caul plates. In the embodiment shown, a caul plate 56 is placed over the skin 12.

Additional elements may be added to the assembly as required, for example structural reinforcements in the form of radius fillers 70 ("noodles") of uncured material (see Fig. 3). In a particular embodiment, a radius filler 70 is provided on the base 16 of the stringer 14 at the junction between the two L-shaped parts forming the stringer, between the base 16 and the skin 12, and accordingly is positioned before the skin 12 is laid on the assembly. The radius filler 70 may deform during compaction and/or during cure to conform to the profile of the junction between the two L-shaped parts of the base 16 and the skin 12. Suitable materials for such radius fillers 70 include, but are not limited to, any material compatible with the resin used for the skin 12 and stringer 14, which may include short fibers, surfacing film, adhesive film, foam adhesive, unidirectional or weaved carbon, glass or para-aramid synthetic (Kevlar®) fibers.

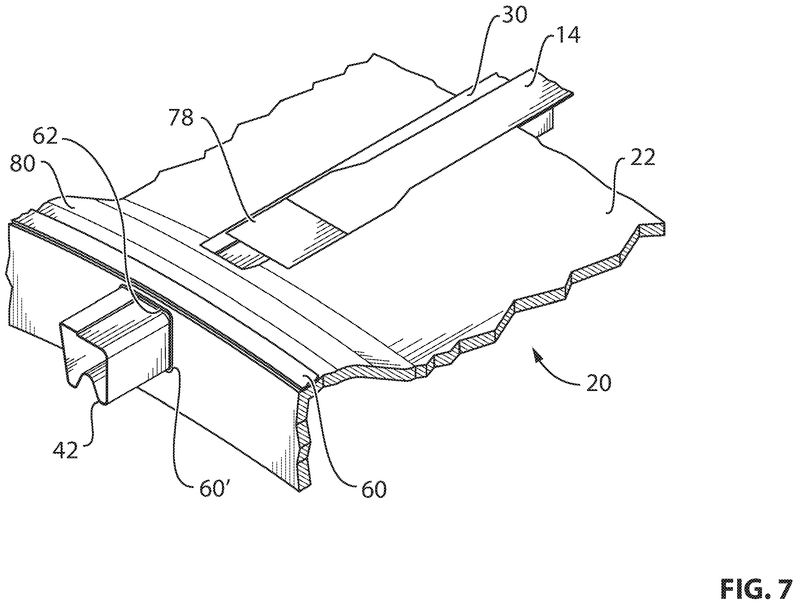

In a particular embodiment and as can be seen in Figs. 7-8, the compaction cavity 24 has a length greater than that of the stringer 14, and a respective end cap 78 is inserted into the compaction cavity 24 adjacent each end of the stringer 14. The end caps 78 have a top surface aligned with the main mold surface 22, and provide support for the portion of the skin 12 extending beyond the length of the stringer 14, to prevent the skin 12 from sagging into the compaction cavity 24. The end caps 78 may also reduce resin bleeding through the ends of the stringer 14.

Once the elements of the assembly are in place, a sealed enclosure is formed, containing the caul plate 56, the skin 12, the stringer(s) 14 and the main mold surface 22. The sealed enclosure is defined in part by each tubular bag 42, by sealing engagement of its outer surface with the mold 20 and/or additional bagging material; each insert 40 is located outside of this sealed enclosure.

In a particular embodiment and referring to Fig. 4, a top bagging material 58 is added over the caul plate 56. Breather material and release film (not shown) are installed as required; for example, in a particular embodiment, breather material is provided where the caul plate 56 would otherwise be in direct contact with the main mold surface 22, over the vacuum ports, etc., and a release film and breather material are installed over the caul plate 56 to prevent direct contact thereof with the bagging material 58. The top bagging material 58 encloses the caul plate 56, the stringer(s) 14 and the skin 12 and is in sealing engagement with the main mold surface 22 around the caul plate 56. For example, the sealing engagement may be provided by engaging the top bagging material 58 with a sealing material 60 (e.g. tacky compound, double faced tape) applied on the main mold surface 22 and disposed to form a closed perimeter around the caul plate 56.

As can be seen more clearly in Figs. 7-8, in a particular embodiment, the mold 20 includes an elevated or ramp surface 80 at each end (only one of which is shown) of the compaction cavity 24, which extends from the mold surface 22 and is angled such as to form a bridge extending over each compaction cavity 24, defining a continuous surface of the mold 20 extending over the ends of the compaction cavities 24; the sealing material 60 is received on the continuous surface of this bridge. This allows the top bagging material 58 (see Fig. 4) to be sealed to the mold 20 around its entire perimeter without requiring a direct sealing engagement between the top bagging material 58 and the tubular bags 42. Accordingly, if the top bagging material 58 or one of the tubular bags 42 develops a leak, it can be replaced independently from the other. It is understood that the configuration of the elevated surface 80 (e.g. angle, profile) may vary from that shown.

If the ramp surface 80 is omitted, the compaction cavities 24 can have an open top along their entire length, and the top bagging material 58 can be sealingly engaged to the surface of the tubular bags 42 over the compaction cavities 24 and with the mold 20 in between the compaction cavities 24.

At some time after positioning each stringer 14 on the respective bagged insert 30 and before forming the sealed enclosure, the interior of each tubular bag 42 is returned to atmospheric pressure if a reduced pressure was applied within the interior of the bags. As can be seen in Figs. 4, 7 and 8, the outer surface of the open ends of each tubular bag 42 is sealingly engaged to the corresponding mold ends around the respective opening 62 defined by the open end of the compaction cavity 24. For example the sealing engagement may be provided by engaging the outer surface of the end of the tubular bag 42 with a sealing material 60' as described above disposed to form a closed perimeter around the opening 62 at the end of the respective compaction cavity 24. The tubular bag(s) 42 and the top bagging material 58 thus cooperate to define the sealed enclosure.

Once the sealed enclosure is formed, the pressure is reduced within the sealed enclosure, for example by engaging a vacuum system 64 with one or more vacuum ports 66 cooperating with the enclosure. The top bagging material 58 and tubular bag(s) 42 defining the enclosure press the skin 12 and the stringer(s) 14 against the mold surfaces 22, 26 to provide for compaction of the assembly. Each tubular bag 42 thus applies uniform pressure on the corners, thickness variations, radius, joggles, grow-outs, etc. of the respective stringer 14, such as to allow a uniform compaction of the assembly. Once the assembly is compacted, each insert 40 is removed from the respective tubular bag 42, and the assembly is cured (e.g. co-curing of the stringer(s) 14 and skin 12) while maintaining a reduced pressure in the sealed enclosure; the reduced pressure during cure may be the same as during compaction (prior to removal of each insert 40) or may be different, for example lower. The assembly can be cured in an oven, or under pressure in an autoclave. The reduced pressure within the sealed enclosure ensures that the top bagging material 58 and tubular bag(s) 42 provide the necessary compaction force against the mold surfaces 22, 26 and caul plate 56 to compact the stringer(s) 14 and skin 12 during the cure. Accordingly, the insert 40 provides support only prior to curing; when the final surface of the stringer 14 and skin 12 is formed under heat and pressure during cure, the tubular bag 42 alone compacts the stringer surface under vacuum.

In the embodiment shown and as can be seen in Fig. 4, each insert 40 extends longitudinally beyond the mold 20 and out of the end of the respective compaction cavity 24, such as to facilitate removal of the insert 40 from the compaction cavity 24 and tubular bag 42. In a particular embodiment, the insert 40 is removed from the tubular bag by first removing the bottom portion 46, thus allowing the top portion 44 to come down in the compaction cavity 24 and disengage from the base 16 of the stringer 14; the top portion 44 is then removed. In the embodiment shown and as can be seen in Fig. 6, the bottom portion 46 extends longitudinally beyond the top portion 44 to facilitate grabbing of the bottom portion 46 independently of the top portion 44 for removal. The contacting surfaces between the two insert portions 44, 46 may be provided with a coating or a layer facilitating relative sliding movement therebetween, to facilitate independent removal of the insert portions 44, 46 from the tubular bag 42; for example, a Teflon tape may be provided on the contacting surfaces between the two insert portions 44, 46.

Since the inserts 40 are removed from the assembly before cure, they do not need to be made of a material able to resist the curing temperatures; accordingly, less expensive materials can be used. In a particular embodiment, the two insert portions 44, 46 are made of a same material. In a particular embodiment, the two insert portions 44, 46 are made of polyurethane having a hardness of 70 Shore A or more. In another embodiment, any semi-rigid material having a sufficient strength to support the stringer 14 during layup can be used, including, but not limited to, any appropriate type of elastomeric material. In a particular embodiment, the use of semi-rigid material for the insert 40 allows the insert 40 to be more easily pulled out from a curved elongated compaction cavity 24, and to be pulled out from a compaction cavity 24 having more complex shape, for example a double curvature.

Although the present method has been described with respect to an inner mold line molding process, it is understood that the insert or other elements of the method can alternately be used with an outer mold line (e.g. concave or female) molding process, particularly where elements extend from an outer surface of the skin and need to be accommodated in a cavity of the mold.

In a particular embodiment, the bagged insert 30 allows the use of an inner mold surface (e.g. convex or male) with an inner stiffener reinforced structure, and accordingly provides an opportunity for improved faying surface quality, thus reducing recurring cost by reducing shimming and assembly time; reduced shimming may also allow for weight savings.

In a particular embodiment, the removable insert 40 allows for the elongated compaction cavity 24 to have a width W (see Fig. 5) that is greater than the thickness t of the leg 18 of the stringer 14, which helps to prevent the cured stringers 14 from getting stuck or "locked" in the elongated compaction cavity 24 when it is time to remove the cured assembly from the mold. The free space in the compaction cavity 24 left by the removal of the insert 40 allows movement of the cured stringer 14 along the direction of the thickness t upon removal of the assembly from the mold, which may facilitate disengaging the cured assembly from the mold.

In a particular embodiment, the insert 40 with the recess 50 to accommodate excess bag material allows the use of standard tubular bags resistant to the curing temperature with a variety of insert shapes and sizes, while accommodating the excess bag material in the recess to provide for wrinkle-free surfaces to contact with the stiffener 14 and skin 12. Use of standard tubular bags, as well as inserts made of a material not required to resist the temperatures of cure, may allow to reduce the costs of manufacturing the composite part.

In a particular embodiment, the two part insert 40 may allow for easy customization of the insert shape to conform to particular shapes of the stiffeners being supported (e.g. double curvature, integrated design features for weight and/or cost optimization such as variable thickness, joggles, grow-outs), which may facilitate conformity with particular quality requirements.

In a particular embodiment, the use of a removable insert 40 avoids problems due to thermal expansion differentials which may occur with supports used during cure.

It is understood that any combination or sub-combination of the elements of the different embodiments is within the scope of this disclosure. While the methods and systems described herein have been described and shown with reference to particular steps performed in a particular order, it will be understood that these steps may be combined, sub-divided or reordered to form an equivalent method without departing from the teachings of the present disclosure. Accordingly, the order and grouping of the steps is not a limitation of the present disclosure.

Modifications and improvements to the above-described embodiments of the present disclosure may become apparent to those skilled in the art. The foregoing description is intended to be exemplary rather than limiting. The scope of the present invention is therefore intended to be limited solely by the scope of the appended claims.

## Claims

1. A method of forming a composite part (10) having a skin (12) and at least one elongated stiffener (14) extending from the skin (12), the method comprising:
providing a mold (20) having a mold surface (22) and a respective elongated compaction cavity (24) for each stiffener (14), each elongated compaction cavity(24) opening into the mold surface (22);
for each stiffener (14):
placing a bagged insert (30) including an insert (40) received in a tubular bag (42) in the respective elongated compaction cavity (24); and
supporting the stiffener (14) with the bagged insert (30), the stiffener having a first part (18) extending in the elongated compaction cavity snuggly between a side surface (36) of the bagged insert (30) and an adjacent side surface (26) of the mold (20) bordering the elongated compaction cavity (24), the stiffener (14) having a second part (16) connected to the first part (18) and extending over at least one of the mold surface (22) and a top surface of the bagged insert;
placing a skin (12) over and in contact with the mold surface (22), and over and in contact with the second part (16) of each stiffener (14);
forming a sealed enclosure containing the skin (12) and each stiffener (14), the sealed enclosure being formed in part by each tubular bag (42), each insert (40) being located outside of the sealed enclosure;
reducing a pressure within the sealed enclosure;
removing each insert (40) from the tubular bag (42); and
curing the skin (12) and each stiffener (14).

2. The method as claimed in claim 1, further comprising inserting the insert (40) in the tubular bag (42) to obtain the bagged insert (30), including inserting two complementary portions of the insert (40) in the tubular bag.

3. The method as claimed in claim 1 or claim 2, wherein the stiffener (14) is supported with the second part (16) of the stiffener extending over the mold surface (22) and the top surface of the bagged insert (30).

4. The method as claimed in claim 3, wherein each stiffener (14) is a stringer with a T-shaped cross-section, the second part (16) defining a base and the first part (18) defining a leg extending transversely to the base.

5. The method as claimed in any preceding claim, wherein the insert (40) is loosely received within the tubular bag (42), the method further comprising inserting the insert in the tubular bag (42) to obtain the bagged insert (30), including receiving excess material from the tubular bag in a recess defined in a surface of the insert spaced from the stiffener (14).

6. The method as claimed in any preceding claim, wherein forming the sealed enclosure includes overlaying the skin (12) with an additional mold element and forming the sealed enclosure to contain the additional mold element.

7. The method as claimed in any preceding claim, wherein forming the sealed enclosure includes sealingly engaging an additional bagging material (58) with the mold surface (22) around a perimeter surrounding the skin (12) and each stiffener (14), and sealingly engaging an outer surface of each end of each tubular bag (42) to a surface of the mold around a perimeter of an open end of the elongated compaction cavity (24).

8. An assembly for forming a composite part (10), the assembly comprising:
a mold (20) having a mold surface (22);
a skin (12) having an internal surface lying against the mold surface (22);
at least one stiffener (14) extending from the internal surface of the skin (12), wherein each of the at least one stiffener:
is partially received in a respective elongated compaction cavity (24) of the mold (20), the respective elongated compaction cavity opening into the mold surface (22); and
is supported and maintained in contact with the mold (20) and with the skin (12) by a respective bagged insert (30) received in the respective elongated compaction cavity (24), the stiffener (14) having a first part (18) extending between the bagged insert (30) and a side surface (26) of the mold (20) bordering the respective elongated compaction cavity (24);
wherein each bagged insert (30) includes an elongated insert (40) received in a respective tubular bag (42);
an additional mold element overlying an outer surface of the skin (12); and
a sealed enclosure defined in part by each tubular bag (42), wherein the skin (12), the additional mold element, each stiffener (14) and at least part of the mold surface (22) are contained within the sealed enclosure, each insert (40) being located outside of the sealed enclosure such as to be removable from the respective tubular bag (42).

9. The assembly as claimed in claim 8, wherein each insert (40) includes two complementary elongated portions (44, 46), a first one of the complementary elongated portions defining an entirety of the top surface (32) of the bagged insert (30).

10. The assembly as claimed in claim 8 or claim 9, wherein each stiffener (14) is supported with a second part of the stiffener extending over the mold surface and a top surface (32) of the bagged insert (30).

11. The assembly as claimed in claim 10, wherein each stiffener (14) is a stringer with a T-shaped cross-section, the second part (16) defining a base and the first part (18) defining a leg extending transversely to the base.

12. The assembly as claimed in any one of claims 8 to 11, wherein the insert (40) includes a recess defined in a surface of the insert spaced from the stiffener (14), the tubular bag (42) having excess material received in the recess.

13. The assembly as claimed in any one of claims 8 to 12, wherein the sealed enclosure is defined by an additional bagging material (58) sealingly engaged with the mold surface (22) around a perimeter surrounding the skin (12), the additional mold element and each stiffener (14), and by a sealing engagement of an outer surface of each end of each tubular bag (42) to a surface of the mold (20) around a perimeter of an open end of the elongated compaction cavity (24).

14. The assembly as claimed in claim 13, wherein on each end of the respective elongated compaction cavity (24), the mold (20) includes an elevated surface (80) extending from the mold surface (22) and forming a bridge extending over each elongated compaction cavity (24), the additional bagging material being sealingly engaged to the bridge over each elongated compaction cavity (24).

15. The assembly as claimed in any one of claims 8 to 14, further comprising, for each of the at least one stiffener (14), first and second end caps each received in the respective elongated compaction cavity (24) adjacent a respective end of the stiffener (14), the first and second end caps (78) supporting the skin (12) beyond a length of the stiffener (14).

## Patentansprüche

1. Verfahren zum Bilden eines Verbundteils (10) mit einer Haut (12) und mindestens einer langgestreckten Steife (14), die sich von der Haut (12) erstreckt, wobei das Verfahren Folgendes umfasst:
Bereitstellen eines Formwerkzeugs (20) mit einer Formwerkzeugoberfläche (22) und einer jeweiligen langgestreckten Verdichtungshöhlung (24) für jede Steife (14), wobei jede langgestreckte Verdichtungshöhlung (24) in die Formwerkzeugoberfläche (22) geöffnet ist;
für jede Steife (14):
Platzieren eines in einem Beutel befindlichen Einsatzes (30), der einen in einem Schlauchbeutel (42) aufgenommenen Einsatz (40) umfasst, in die jeweilige langgestreckte Verdichtungshöhlung (24); und
Stützen der Steife (14) mit dem in einem Beutel befindlichen Einsatz (30), wobei die Steife einen ersten Teil (18) aufweist, der sich in der langgestreckten Verdichtungshöhlung festsitzend zwischen einer seitlichen Oberfläche (36) des in einem Beutel befindlichen Einsatzes (30) und einer an die langgestreckte Verdichtungshöhlung (24) angrenzenden, benachbarten seitlichen Oberfläche (26) des Formwerkzeugs (20) erstreckt, wobei die Steife (14) einen zweiten Teil (16) aufweist, der mit dem ersten Teil (18) verbunden ist und sich über die Formwerkzeugoberfläche (22) und/oder eine obere Oberfläche des in einem Beutel befindlichen Einsatzes erstreckt;
Platzieren einer Haut (12) über die und in Kontakt mit der Formwerkzeugoberfläche (22) und über den und in Kontakt mit dem zweiten Teil (16) jeder Steife (14);
Bilden einer die Haut (12) und jede Steife (14) enthaltenden dichtschließenden Umhüllung, wobei die dichtschließende Umhüllung teilweise von jedem Schlauchbeutel (42) gebildet wird, wobei sich jeder Einsatz (40) außerhalb der dichtschließenden Umhüllung befindet;
Senken eines Drucks in der dichtschließenden Umhüllung;
Entnehmen jedes Einsatzes (40) aus dem Schlauchbeutel (42); und
Aushärten der Haut (12) und jeder Steife (14).

2. Verfahren nach Anspruch 1, weiter umfassend das Einsetzen des Einsatzes (40) in den Schlauchbeutel (42), um den in einem Beutel befindlichen Einsatz (30) zu erhalten, umfassend das Einsetzen von zwei komplementären Abschnitten des Einsatzes (40) in den Schlauchbeutel.

3. Verfahren nach Anspruch 1 oder Anspruch 2, wobei die Steife (14) derart gestützt wird, das sich der zweite Teil (16) der Steife über die Formwerkzeugoberfläche (22) und die obere Oberfläche des in einem Beutel befindlichen Einsatzes (30) erstreckt.

4. Verfahren nach Anspruch 3, wobei es sich bei jeder Steife (14) um einen Stringer mit einem T-förmigen Querschnitt handelt, wobei der zweite Teil (16) eine Basis definiert und der erste Teil (18) einen sich quer zu der Basis erstreckenden Schenkel definiert.

5. Verfahren nach einem der vorangehenden Ansprüche, wobei der Einsatz (40) locker in dem Schlauchbeutel (42) aufgenommen wird, wobei das Verfahren weiter das Einsetzen des Einsatzes in dem Schlauchbeutel (42), um den in einem Beutel befindlichen Einsatz (30) zu erhalten, umfasst, umfassend das Aufnehmen von überschüssigem Material von dem Schlauchbeutel in einer in einer von der Steife (14) beabstandeten Oberfläche des Einsatzes definierten Aussparung.

6. Verfahren nach einem der vorangehenden Ansprüche, wobei das Bilden der dichtschließenden Umhüllung das Überlagern der Haut (12) mit einem zusätzlichen Formwerkzeugelement und das Bilden der dichtschließenden Umhüllung, um das zusätzliche Formwerkzeugelement zu enthalten, umfasst.

7. Verfahren nach einem der vorangehenden Ansprüche, wobei das Bilden der dichtschließenden Umhüllung das dichtschließende Ineingriffbringen eines zusätzlichen Beutelmaterials (58) mit der Formwerkzeugoberfläche (22) um einen die Haut (12) und jede Steife (14) umgebenden Umfang herum und das dichtschließende Ineingriffbringen einer äußeren Oberfläche jedes Endes jedes Schlauchbeutels (42) mit einer Oberfläche des Formwerkzeugs, um einen Umfang eines offenen Endes der langgestreckten Verdichtungshöhlung (42) herum umfasst.

8. Anordnung zum Bilden eines Verbundteils (10), wobei die Anordnung Folgendes umfasst:
ein Formwerkzeug (20) mit einer Formwerkzeugoberfläche (22);
eine Haut (12) mit einer inneren Oberfläche, die an der Formwerkzeugoberfläche (22) anliegt;
mindestens eine Steife (14), die sich von der inneren Oberfläche der Haut (12) erstreckt, wobei jede der mindestens einen Steife:
teilweise in einer jeweiligen langgestreckten Verdichtungshöhlung (24) des Formwerkzeugs (20) aufgenommen ist, wobei die jeweilige langgestreckte Verdichtungshöhlung in die Formwerkzeugoberfläche (22) geöffnet ist; und
von einem in der jeweiligen langgestreckten Verdichtungshöhung (24) aufgenommenen jeweiligen in einem Beutel befindlichen Einsatz (30) gestützt und mit dem Formwerkzeug (20) und mit der Haut (12) in Kontakt gehalten wird, wobei die Steife (14) einen ersten Teil (18) aufweist, der sich zwischen dem in einem Beutel befindlichen Einsatz (30) und einer an die jeweilige langgestreckte Verdichtungshöhlung (24) angrenzenden seitlichen Oberfläche (26) des Formwerkzeugs (20) erstreckt;
wobei jeder in einem Beutel befindliche Einsatz (30) einen in einem jeweiligen Schlauchbeutel (42) aufgenommenen langgestreckten Einsatz (40) umfasst;
ein zusätzliches Formwerkzeugelement, das einer äußeren Oberfläche der Haut (12) überlagert ist; und
eine dichtschließende Umhüllung, die teilweise von jedem Schlauchbeutel (42) definiert wird, wobei die Haut (12), das zusätzliche Formwerkzeugelement, jede Steife (14) und mindestens ein Teil der Formwerkzeugoberfläche (22) in der dichtschließenden Umhüllung enthalten sind, wobei sich jeder Einsatz (40) außerhalb der dichtschließenden Umhüllung befindet, sodass er aus dem jeweiligen Schlauchbeutel (42) entnehmbar ist.

9. Anordnung nach Anspruch 8, wobei jeder Einsatz (40) zwei komplementäre langgestreckte Abschnitte (44, 46) umfasst, wobei ein erster der komplementären langgestreckten Abschnitte ein Ganzes der oberen Oberfläche (32) des in einem Beutel befindlichen Einsatzes (30) definiert.

10. Anordnung nach Anspruch 8 oder Anspruch 9, wobei jede Steife (14) derart gestützt wird, dass sich ein zweiter Teil (16) der Steife über die Formwerkzeugoberfläche (22) und eine obere Oberfläche des in einem Beutel befindlichen Einsatzes (30) erstreckt.

11. Anordnung nach Anspruch 10, wobei es sich bei jeder Steife (14) um einen Stringer mit einem T-förmigen Querschnitt handelt, wobei der zweite Teil (16) eine Basis definiert und der erste Teil (18) einen sich quer zu der Basis erstreckenden Schenkel definiert.

12. Anordnung nach einem der Ansprüche 8 bis 11, wobei der Einsatz (40) eine in einer von der Steife (14) beabstandeten Oberfläche des Einsatzes eine Aussparung umfasst, wobei der Schlauchbeutel (42) in der Aussparung aufgenommenes überschüssiges Material aufweist.

13. Anordnung nach einem Ansprüche 8 bis 12, wobei die dichtschließende Umhüllung von einem zusätzlichen Beutelmaterial (58), das sich mit der Formwerkzeugoberfläche (22) um einen die Haut (12) und jede Steife (14) umgebenden Umfang herum dichtschließend im Eingriff befindet, und durch einen dichtschließenden Eingriff einer äußeren Oberfläche jedes Endes jedes Schlauchbeutels (42) mit einer Oberfläche des Formwerkzeugs (20) um einen Umfang eines offenen Endes der langgestreckten Verdichtungshöhlung (42) herum definiert wird.

14. Anordnung nach Anspruch 13, wobei das Formwerkzeug (20) an jedem Ende der jeweiligen langgestreckten Verdichtungshöhlung (24) eine erhöhte Oberfläche (80) umfasst, die sich von der Formoberfläche (22) erstreckt und eine Brücke bildet, die sich über jede langgestreckte Verdichtungshöhlung (24) erstreckt, wobei sich das zusätzliche Beutelmaterial dichtschließend mit der Brücke über jeder langgestreckten Verdichtungshöhlung (24) im Eingriff befindet.

15. Anordnung nach einem der Ansprüche 8 bis 14, weiter umfassend, für jede der mindestens einen Steife (14), einer ersten und einer zweiten Endkappe, die jeweils in der jeweiligen langgestreckten Verdichtungshöhlung (24) einem jeweiligen Ende der Steife (14) benachbart aufgenommen sind, wobei die erste und die zweite Endkappe (78) die Haut (12) über eine Länge der Steife (14) hinaus stützen.

## Revendications

1. Une méthode de façonnage d'une pièce composite (10) comprenant un revêtement (12) et au moins un raidisseur allongé (14) s'étendant depuis le revêtement (12), la méthode comprenant :
la fourniture d'un moule (20) disposant d'une surface de moulage (22) et d'une cavité de compactage allongée (24) respective pour chaque raidisseur (14), chaque cavité de compactage allongée (24) s'ouvrant sur la surface de moulage (22) ;
pour chaque raidisseur (14) :
le placement d'un insert ensaché (30) comprenant un insert (40) hébergé dans un sac tubulaire (42) dans la cavité de compactage allongée (24) respective ; et
le soutien du raidisseur (14) avec l'insert ensaché (30), le raidisseur comprenant une première partie (18) s'étendant dans la cavité de compactage allongée en étant bien ajustée entre une surface latérale (36) de l'insert ensaché (30) et une surface latérale adjacente (26) du moule (20) bordant la cavité de compactage allongée (24), le raidisseur (14) comprenant une seconde partie (16) connectée à la première partie (18) et s'étendant sur au moins l'une des surfaces de moulage (22) et une surface supérieure de l'insert ensaché ;
le placement d'un revêtement (12) sur et au contact de la surface de moulage (22), et sur et au contact de la seconde partie (16) de chaque raidisseur (14) ;
la formation d'une enceinte scellée comprenant le revêtement (12) et chaque raidisseur (14), l'enceinte scellée étant partiellement formée de chaque sac tubulaire (42), chaque insert (40) étant placé hors de l'enceinte scellée ;
la réduction de la pression dans l'enceinte scellée ;
le retrait de chaque insert (40) du sac tubulaire (42) ; et
le durcissement du revêtement (12) et de chaque raidisseur (14).

2. La méthode selon la revendication 1, comprenant par ailleurs l'insertion de l'insert (40) dans le sac tubulaire (42) pour obtenir l'insert ensaché (30), y compris l'insertion de deux parties complémentaires de l'insert (40) dans le sac tubulaire.

3. La méthode selon la revendication 1 ou la revendication 2, dans laquelle le raidisseur (14) est soutenu par la seconde partie (16) du raidisseur s'étendant sur la surface de moulage (22) et la surface supérieure de l'insert ensaché (30).

4. La méthode selon la revendication 3, dans laquelle chaque raidisseur (14) est une lisse munie d'une section transversale en T, la seconde partie (16) définissant une base et la première partie (18) définissant un pied s'étendant de façon transversale par rapport à la base.

5. La méthode selon l'une des revendications précédentes, dans laquelle l'insert (40) est hébergé de façon lâche dans le sac tubulaire (42), la méthode comprenant par ailleurs l'insertion de l'insert dans le sac tubulaire (42) pour obtenir l'insert ensaché (30), y compris la réception du surplus de matériau du sac tubulaire dans une cavité définie dans une surface de l'insert à distance du raidisseur (14).

6. La méthode selon l'une des revendications précédentes, dans laquelle le formage de l'enceinte scellée comprend le recouvrement du revêtement (12) par un élément de moulage supplémentaire et le formage de l'enceinte scellée de façon à ce qu'elle contienne l'élément de moulage supplémentaire.

7. La méthode selon l'une des revendications précédentes, dans laquelle la création de l'enceinte scellée comprend l'engagement hermétique d'un matériel d'ensachage supplémentaire (58) sur la surface de moulage (22) autour d'un périmètre entourant le revêtement (12) et chaque raidisseur (14), et l'engagement hermétique d'une surface extérieure de chaque extrémité de chaque sac tubulaire (42) sur une surface du moule autour d'un périmètre d'une extrémité libre de la cavité de compactage allongée (24).

8. Un assemblage formant une pièce composite (10), l'assemblage comprenant :
un moule (20) disposant d'une surface de moulage (22) ;
un revêtement (12) disposant d'une surface interne reposant contre la surface de moulage (22) ;
au moins un raidisseur (14) s'étendant depuis la surface interne du revêtement (12), dans lequel chacun du ou des raidisseurs :
est partiellement hébergé dans une cavité de compactage allongée (24) respective du moule (20), la cavité de compactage allongée respective s'ouvrant sur la surface de moulage (22) ; et
est soutenu et maintenu au contact du moule (20) et du revêtement (12) par un insert ensaché (30) respectif hébergé dans la cavité de compactage allongée (24) respective, le raidisseur (14) disposant d'une première partie (18) s'étendant entre l'insert ensaché (30) et une surface latérale (26) du moule (20) bordant la cavité de compactage allongée (24) respective ;
dans lequel chaque insert ensaché (30) comprend un insert allongé (40) hébergé dans un sac tubulaire (42) respectif ;
un élément de moulage supplémentaire recouvrant une surface extérieure du revêtement (12) ; et
une enceinte scellée partiellement définie par chaque sac tubulaire (42), dans laquelle le revêtement (12), l'élément de moulage supplémentaire, chaque raidisseur (14) et au moins une partie de la surface de moulage (22) sont contenus dans l'enceinte scellée, chaque insert (40) étant situé hors de l'enceinte scellée de façon à pouvoir être retiré du sac tubulaire (42) respectif.

9. L'assemblage selon la revendication 8, dans lequel chaque insert (40) comprend deux parties allongées supplémentaires (44, 46), la première des parties allongées supplémentaires définissant une totalité de la surface supérieure (32) de l'insert ensaché (30).

10. L'assemblage selon la revendication 8 ou la revendication 9, dans lequel chaque raidisseur (14) est soutenu par la seconde partie du raidisseur s'étendant sur la surface de moulage et une surface supérieure (32) de l'insert ensaché (30).

11. L'assemblage selon la revendication 10, dans lequel chaque raidisseur (14) est une lisse munie d'une section transversale en T, la seconde partie (16) définissant une base et la première partie (18) définissant un pied s'étendant de façon transversale par rapport à la base.

12. L'assemblage selon l'une des revendications 8 à 11, dans lequel l'insert (40) comprend une cavité définie dans une surface de l'insert à distance du raidisseur (14), le sac tubulaire (42) hébergeant le surplus de matériau dans la cavité.

13. L'assemblage selon l'une des revendications 8 à 12, dans lequel l'enceinte scellée est définie par un matériel d'ensachage supplémentaire (58) engagé hermétiquement sur la surface de moulage (22) autour d'un périmètre entourant le revêtement (12), l'élément de moulage supplémentaire et chaque raidisseur (14), et par l'engagement hermétique d'une surface extérieure de chaque extrémité de chaque sac tubulaire (42) sur une surface du moule (20) autour d'un périmètre d'une extrémité libre de la cavité de compactage allongée (24).

14. L'assemblage selon la revendication 13, dans lequel sur chaque extrémité de la cavité de compactage allongée (24) respective, le moule (20) comprend une surface surélevée (80) s'étendant depuis la surface de moulage (22) et formant un pont s'étendant au-dessus de chaque cavité de compactage allongée (24), le matériau d'ensachage supplémentaire étant engagé hermétiquement sur le pont au-dessus de chaque cavité de compactage allongée (24).

15. L'assemblage selon l'une des revendications 8 à 14, comprenant par ailleurs pour chacun du ou des raidisseurs (14), un premier et un second embout hébergés chacun dans la cavité de compactage allongée (24) respective adjacente à une extrémité respective du raidisseur (14), le premier et le second embout (78) soutenant le revêtement (12) au-delà d'une longueur du raidisseur (14).
